# EUROPÄISCHE PATENTSCHRIFT

(11) **EP 0 285 793 B1**
(45) Veröffentlichungstag und Bekanntmachung des Hinweises auf die Patenterteilung: **28.07.1993**
(21) Anmeldenummer: 88102873.2
(22) Anmeldetag: 26.02.1988
(51) Int. Cl.: H01H 3/14, H01H 3/40

(54) **Sitzkontaktschalter**
Seat contact switch
Détecteur de contact sur un siège

(30) Priorität: 07.04.1987 DE 3711677
(43) Veröffentlichungstag der Anmeldung: 12.10.1988
(73) Patentinhaber: DAIMLER-BENZ AKTIENGESELLSCHAFT, 70327 Stuttgart (DE)
(72) Erfinder: Krug, Martin, D-7038 Holzgerlingen (DE); Dahm, Horst, D-7261 Ostelsheim (DE); Mötting, Götz, D-7030 Böblingen (DE)

(56) Entgegenhaltungen:
- DE-C- 859 778
- FR-B- 2 169 982
- US-A- 1 809 651
- US-A- 1 821 264

## Beschreibung

Die Erfindung bezieht sich auf einen Sitzkontaktschalter mit den Merkmalen des Oberbegriffs des Patentanspruchs 1.

Ein gattungsgemäßer Sitzkontaktschalter ist bekannt (DE-AS 22 04 318). Seine Betätigungsvorrichtung weist einen ersten, langen Federbügel auf, der an einem freien Ende an einer Sitzfeder angelenkt ist und an seinem anderen Ende mittels einer Wickelfeder-Rutschkupplung auf einer schwenkbaren Welle befestigt ist. Mit der Welle ist ein zweiter Federbügel fest verbunden, der an seinem freien Ende einen Schalterkontakt trägt.

Die Welle ist als Basisteil an einem Sitzrahmen gelagert und kann lediglich über einen durch Anschläge begrenzten Winkel geschwenkt werden. Wenn die Sitzfeder bei Belastung der Sitzfläche einfedert, wird der erste, lange Federbügel um die Welle geschwenkt und nimmt diese über die Wickelfeder-Rutschkupplung mit, bis ihre weitere Verdrehung durch einen der Anschläge gestoppt wird. Gleichzeitig wird der zweite Federbügel soweit geschwenkt, daß sein Schalterkontakt mit einem sitzrahmenfesten zweiten Schalterkontakt in Berührung kommt. Somit ist der Sitzkontaktschalter geschlossen. Bei weitergehender Einfederung der Sitzfeder rutscht die Wickelfeder auf der Welle durch und ermöglicht eine Freilaufbewegung des ersten Federbügels gegen die Welle. Beim Ausfedern der Sitzfeder wird der erste, lange Federbügel wieder zurückgeführt und nimmt die Welle unter gleichzeitigem Trennen der beiden Schalterkontakte rückwärts mit, bis diese von dem anderen Anschlag gestoppt wird.
Im Normalfall - lediglich elastische Verformung der Sitzfeder - wird auch die Wickelfeder bei Entlastung wieder in ihre Ausgangsstellung auf der Welle zurückrutschen. Bleibende Verformungen der Sitzfeder führen jedoch zu geringfügigem Versetzen der Wickelfeder auf der Welle in Belastungsrichtung gegenüber der Ausgangsstellung, welches zum Ausgleich von ermüdungsbedingten bleibenden Verformungen genügt.

Gerade bei häufiger Benutzung des betreffenden Sitzes ist die Wickelfeder-Rutschkupplung verschleißgefährdet und kann bei fortgeschrittenem Verschleiß auch dann durchrutschen, wenn die Welle noch nicht an einem Anschlag anliegt. Im Extremfall kann dies auch bei unbesetztem Sitz zu dauerndem Geschlossenhalten der Schalterkontakte führen, wenn beispielsweise der zweite Federbügel durch sein Eigengewicht die Welle gegen die geschwächte Reibwirkung der Wickelfeder dreht. Diese braucht ja vor dem Schließen der Schalterkontakte nicht bis zu dem einen Anschlag geschwenkt zu werden. Ferner können auch die unvermeidliche Hysterese der Wickelfederkupplung, bleibende Verformungen der beiden Federbügel und trägheitsbedingte Schwingungen des zweiten Federbügels zu Störungen und Fehlerfunktionen der bekannten Betätigungsvorrichtung führen.

Aus der DE-OS 24 07 299 ist ein Sitzkontaktschalter bekannt, der an einer Sitzfeder befestigt ist und durch Verformung des Sitzpolsters gegenüber der Sitzfeder betätigt wird.

Zwar haben auf diesen bleibende Verformungen der Sitzfeder keinen störenden Einfluß, jedoch wird er dauernd betätigt, wenn das Sitzpolster selbst durchgesessen ist.

Ein funktionssicherer, zwischen Sitzfederung und -polster einschiebbarer Sitzkontaktschalter ohne Nachstellvorrichtung ist ferner aus der DE-PS 35 42 627 bekannt.
Aus dem Fachbuch "Übersicht über Kinematik / Getriebelehre" (Knab, H.-J., 2. Auflage, Nürnberg 1930, Selbstverlag, S. 76, Abb. 574) ist ein Stirngesperre der bei dem erfindungsgemäßen Sitzkontaktschalter als Freilauf verwendeten Art bekannt. Aus der DE-PS 859 778 ist ein mittels einer steilgängigen Gewindespindel schaltbarer Hochspannungsschalter bekannt.

Sitzkontaktschalter sind nicht nur für Sicherheitsgurt-Anlegekontrollen im Einsatz - wie in den beiden genannten Fällen -, sondern dienen auch zur Besetzungsüberwachung von Beifahrersitzen, auf denen ein Passagier durch ein Luftsack-Rückhaltesystem bei Aufprallunfällen geschützt wird. In diesem Einsatzfall kann ein Sitzkontaktschalter das ferngesteuerte Auslösen des Luftsack-Füllvorgangs bei unbesetztem Sitz durch ein Sperrsignal verhindern.

Eine solche Schutzfunktion ist jedoch nur mit auch langfristig zuverlässig funktionierenden Sitzkontaktschaltern zu realisieren.

Die Erfindung hat daher die Aufgabe, den gattungsgemäßen Sitzkontaktschalter so zu verbessern, daß er auch bei stärkster Sitzbeanspruchung langfristig zuverlässig arbeitet und gleichzeitig keinen großen Raumbedarf innerhalb eines Sitzes hat.

Diese Aufgabe wird erfindungsgemäß durch die kennzeichnenden Merkmale des Patentanspruchs 1 gelöst. Die Unteransprüche kennzeichnen vorteilhafte Weiterbildungen des erfindungsgemäßen Sitzkontaktschalters.

Es wurde eine sehr kompakte Schalteranordnung geschaffen, die einfach anzubringen und auszubauen ist, ohne daß wesentliche Eingriffe in den Sitzaufbau notwendig sind.

Durch die Verwendung einer mittels eines steilgängigen Gewindes antreibbaren Stellschraube ist es möglich, bei koaxialer linearer Verschiebung zweier Elemente (Basisteil und beweglicher Teil) gegeneinander deren gegenseitige Ruhelage zu verändern, d.h. die freie, unbelastete Eigenlänge beider Bauteile zusammen kann variiert, im speziellen Fall zum Ausgleich von Setzvorgängen der Sitzfederung verkürzt werden. Diese Verkürzung erfolgt schrittweise bei jedem Belasten der Sitzfederung und schneller, als diese sich setzen kann. Im Ruhezustand des Sitzes ergibt sich daher eine Längendifferenz aus dem Abstand zwischen den Punkten an Sitzrahmen und Sitzfederung, an denen der Sitzkontaktschalter angelenkt ist, einerseits und dem Abstand zwischen den Anlenkpunkten am Sitzkontaktschalter selbst andererseits. Diese Längendifferenz führt zu einer Verspannung des Sitzkontaktschalters, die durch geeignete Anordnung von dessen Schaltkontakten diese bei entlastetem Sitz sicher in ihrer Grundstellung festhält. Da, wie bereits gesagt, die Schalternachstellung immer dem Setzen der Sitzfederung voreilt, muß diese Verspannung im Normalfall durch selbsttätiges Rücksetzen der Nachstellvorrichtung von Zeit zu Zeit wieder abgebaut werden.

Anhand genauer Beschreibung von Abbildungen eines Ausführungsbeispiels des erfindungsgemäßen Sitzkontaktschalters wird dessen Funktionsweise im folgenden veranschaulicht.

Es zeigen:
- Figur 1: eine teilweise aufgeschnittene Gesamtansicht des Sitzkontaktschalters,
- Figur 2: eine um 90° geklappte Schnittansicht des Sitzkontaktschalters
- Figur 3: in Detailansicht Schalterkontakte eines Öffnerschalters und
- Figur 4: eine Ansicht einer federfähigen Blechmutter.

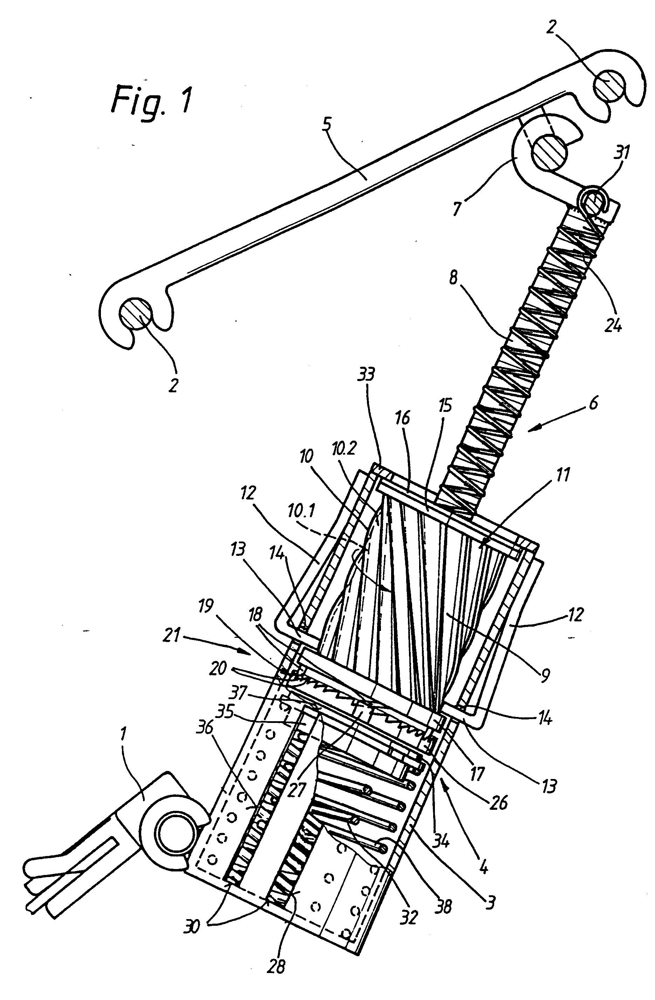

Die Teilschnittansicht in Figur 1 zeigt den Sitzkontaktschalter in angedeuteter Einbaulage in einem Kraftfahrzeugsitz, der nur durch eine Halterung 1 an einem nicht dargestellten Sitzrahmen und durch eine Sitzfederung 2 repräsentiert ist.
An der Halterung 1 ist ein becherförmiger Basisteil 3 einer Betätigungsvorrichtung 4 schwenkbar eingeklipst. Über eine Ankerplatte 5 ist ein beweglicher Teil 6 der Betätigungsvorrichtung 4 an der Sitzfederung 2 mittels eines Haltehakens 7 clipsbar angelenkt.

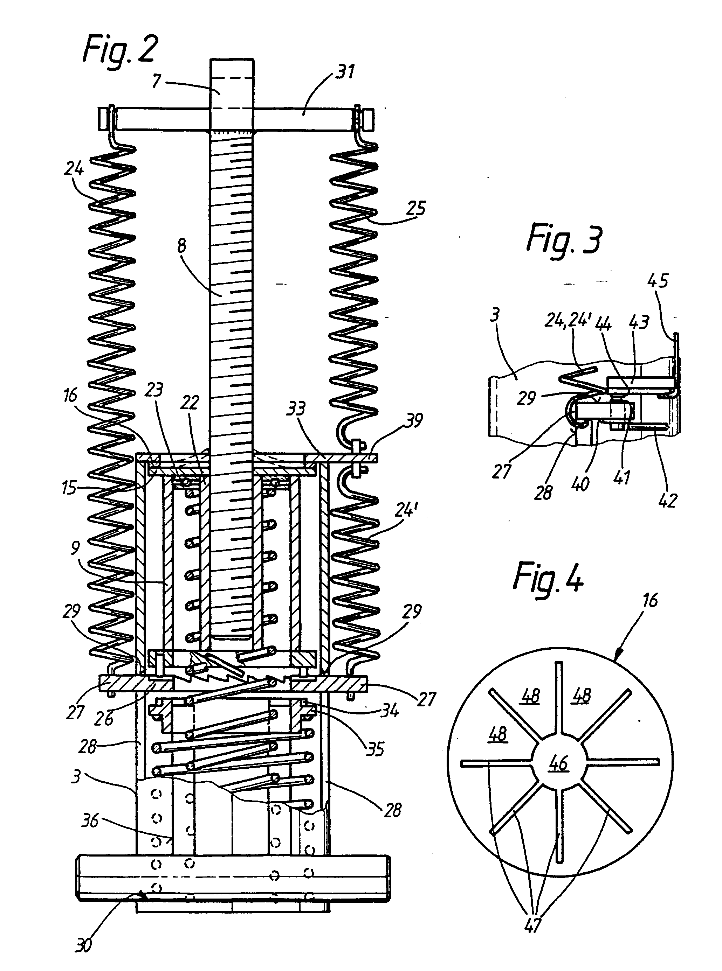

Der bewegliche Teil 6 weist einen Gewindebolzen 8 mit Feingewinde, eine später genauer beschriebene Nachstellvorrichtung 9 bis 23, einen beweglichen Kontaktträger 26 - der durch Führungsfortsätze 27 in Längsschlitzen 28 des Basisteils 3 zwischen Anschlägen 29 (Fig.2) und 30 geführt ist - Federn 24, 24' (Schraubenzugfedern) auf, welche an Federhalterungen 31 des Haltehakens 7 einerseits und
- in einer ersten Ausführung (24) am beweglichen Kontaktträger 26,
- in einer zweiten Ausführung (24') am Basisteil 3
andererseits eingehängt sind. Beide Ausführungsformen sind in Figur 2 angedeutet und werden im Zusammenhang mit dieser beschrieben werden.

Der bewegliche Teil 6 der Betätigungsvorrichtung 4 ist in deren becherförmigem Basisteil 3 koaxial verschiebbar geführt und wird durch eine Druckfeder 32, die am Boden des Basisteils 3 abgestützt ist, gegen einen Anschlag 33 in Form einer Deckscheibe am der Sitzfederung 2 zugewandten Ende des Basisteils 3 vorgespannt.

Ein ringförmiger Schalterkontakt 34 ist im Basisteil 3 mittels eines Stützrings 35 in Wandschlitzen 36 verschiebbar zwischen Anschlägen 37, 30 geführt und wird durch eine weitere Druckfeder 38, die einen größeren Durchmesser hat als die Druckfeder 32 und sich ebenfalls am Boden des Basisteils 3 abstützt, gegen die Anschläge 37 in Richtung auf den beweglichen Kontaktträger 26 vorgespannt.

Teil der Nachstellvorrichtung ist eine Hülse 9, deren Außenseite mit Gewindegängen 10 eines 30° - Steilgewindes 11 (Linksgewinde) versehen ist.

Auf der Außenseite des Basisteils 3 sind Federhaken 12 befestigt, die mit abgewinkelten Federhakenenden 13 durch Bohrungen 14 in der Wand des Basisteils 3 geführt sind und in jeweils einen Gewindegang des Steilgewindes 11 eingreifen.

Zur Sitzfederung 2 hin wird die Hülse 9 von einer Scheibe 15 und einer Stellmutter 16 aus Blech mit Feingewinde - die auf den Gewindebolzen 8 aufgeschraubt ist - abgeschlossen. Die Stellmutter 16 liegt im entspannten Zustand der Betätigungsvorrichtung 4, d.h. bei unbesetztem Sitz, mit ihrem Außenrand an dem Anschlag 33 des Basisteils 3 an.

Am anderen, dem Sitzrahmen zugewandten Ende der Hülse 9 ist diese mit einem Klinkenträgerring 17 versehen, der vier über seinen Umfang gleichmäßig verteilte Federklinken 18 trägt, die schräg von der Hülse 9 weg auf den beweglichen Kontaktträger 26 weisen. Letzterer ist auf seiner der Hülse 9 zugewandten Oberfläche mit einem stirnverzahnten Zahnkranz 19 mit Sägezähnen 20 versehen. Die Federklinken 18 und der Zahnkranz 19 bilden einen Freilauf 21, der eine Umdrehung der Hülse 9 bzw. des Klinkenträgerrings 17 nur in eine Richtung - angedeutet durch einen Pfeil - zuläßt, in die andere Richtung hingegen verhindert, da der bewegliche Kontaktträger 26 ja zwar verschiebbar, aber drehfest im Basisteil 3 geführt ist.

Die Gewindegänge 10 des Steilgewindes 11 sind sägezahnförmig, wobei ihre steileren Flanken 10.1 mit den Federhakenenden 13 in Eingriff kommen, wenn durch Belastung der Sitzfederung 2 der bewegliche Teil 6 der Betätigungsvorrichtung 4 im Basisteil 3 gegen die Kraft der Druckfeder 32 verschoben wird.

Durch diesen Eingriff wird die Hülse 9 während der Verschiebebewegung des beweglichen Teils 6 gedreht, und die Stellmutter 16 wird - bei rechtsgängigem Feingewinde - auf dem Gewindebolzen 8 um einen Umdrehungsbruchteil auf den Haltehaken 7 zu verstellt. Gleichzeitig springen die Federklinken 18 um einen oder zwei Zähne auf dem Zahnkranz 19 weiter.

Bei Entlastung der Sitzfederung 2 wird der bewegliche Teil 6 wieder aus dem Basisteil 3 herausgezogen. Der Freilauf 21 sperrt, da nunmehr bei einer Rückdrehbewegung der Hülse 9 die Federklinken 18 an den Steilflanken der Sägezähne 20 angreifen. Die Federhakenenden 13 laufen jetzt an den Schrägflanken 10.2 der jeweiligen Gewindegänge an, klettern bei weiterem Herausziehen der Hülse 9 auf und springen über in den nächsten Gewindegang.

In Figur 2 ist eine um 90° gegenüber Figur 1 geklappte weitere Schnittansicht des Sitzkontaktschalters gezeigt, die vor allem zum besseren Verständnis der Nachstellfunktion dient.

Hier ist die Hülse 9 aufgeschnitten und vereinfacht ohne das Steilgewinde 11 dargestellt. Desgleichen sind die Federhaken 12 weggelassen.

Als zusätzliche Teile der Nachstellvorrichtung sind nun noch ein Führungsrohr 22, das an der Scheibe 15 befestigt ist und den Gewindebolzen 8 führt, und ein Axialkugellager 23, das die Druckfeder 32 von der Drehbewegung der von dieser vorgespannten Hülse 9 entkoppelt, zu nennen.

Ferner ist auf einer Seite der Betätigungsvorrichtung 4 die durchgehende Feder 24 zwischen einem Führungsfortsatz 27 des beweglichen Kontaktträgers 26 und der Federhalterung 31 gespannt, während auf der anderen Seite - wie bereits weiter oben erwähnt - als zweite Ausführung eine Feder 24' zwischen dem Führungsfortsatz 27 des beweglichen Kontaktträgers 26 und einer Federhalterung 39 der Deckscheibe 33 und eine weitere Feder 25 zwischen letzterer Federhalterung 39 und der Federhalterung 31 gespannt sind.

Selbstverständlich sind im Anwendungsfall stets beide Seiten gleich mit einer durchgehenden oder mit zwei getrennten Federn bestückt, wobei letztere Variante den Vorteil hat, daß bei einer defekten Halterung 1 oder einem defekten Haltehaken 7 der Sitzkontaktschalter durch die Federn 25 zwischen Haltehaken 7 und Basisteil 3 in seine betätigte, "Sitz besetzt" signalisierende Stellung gezogen wird. Ein derartiger Defekt kann längere Zeit unbemerkt bleiben; mit der vorteilhaften Federanordnung wird aber die Funktion einer etwa vom Sitzkontaktschalter abhängigen Insassenschutzeinrichtung sichergestellt.

Beim Belasten der Sitzfederung 2 und Verschieben des beweglichen Teils 6 wird der bewegliche Kontaktträger 26 nach kurzem Leerhub in elektrischen Kontakt mit dem ringförmigen Schalterkontakt 34 gebracht. Der bewegliche Kontaktträger 26 kann selbst vollständig aus leitendem Material bestehen oder auch einen mit dem ringförmigen Schalterkontakt 34 korrespondierenden Einsatz tragen. In jedem Fall wird hierdurch eine Schließerschalter-Funktion ermöglicht. Die benötigten Anschlußkabel können einfach z.B. durch die Längsschlitze 28 oder Wandschlitze 36 im Basisteil 3 nach außen geführt werden.

Auch wenn die Längsachse des Sitzkontaktschalters deutlich schräg zur Einfederungsrichtung der Sitzfederung 2 liegt, ist der Betätigungsweg bis zum Schließen des Schalters nur ein sehr geringer Anteil der Gesamtbewegung, so daß der Schalter unabhängig vom Gewicht des Passagiers geschlossen wird. Die weitere Sitzfederbewegung wird durch Zusammendrücken der Druckfedern 32 und 38 aufgefangen. Die Nachstellvorrichtung bzw. deren Stellschraube wird umso weiter verstellt, je tiefer die Sitzfederung einfedert.

Mit dem erfindungsgemäßen Sitzkontaktschalter kann auch eine Öffnerschalterfunktion realisiert werden. Im Detail sind in Figur 3 die entsprechenden Schalterkontakte und deren Umgebung dargestellt.

Mit einem der Führungsfortsätze 27 des beweglichen Kontaktträgers 26 ist ein Tragarm 40 fest verbunden, der einen elektrisch isolierten Schalterkontakt 41 mit einem Anschlußkabel 42 trägt.

Auf einem Außenwandvorsprung 43 des Basisteils 3 ist ein weiterer, fester Schalterkontakt 44 mit einer Zuleitung 45 elektrisch isoliert angeordnet.

In der gezeichneten Stellung liegt der Führungsfortsatz 27 an einem Anschlag 29 an, und die beiden Schalterkontakte 41 und 44 sind elektrisch verbunden.

Wird nun bei Belastung der Sitzfederung 2 der bewegliche Kontaktträger 26 im Längsschlitz 28 verschoben, so werden die beiden Schalterkontakte 41 und 44 voneinander getrennt und wird der vorher geschlossene Stromkreis unterbrochen.

Es können beide (Schließer- und Öffner-) Funktionen gemeinsam vorgesehen werden, aber auch jede für sich einzeln.

Im gemeinsamen Einsatzfall wird bei jeder Belastung der Sitzfederung der Öffner geöffnet und gleichzeitig der Schließer geschlossen.

Schließlich ist in Figur 4 eine Ansicht der Stellmutter 16 dargestellt.

Ihre Mittelbohrung 46 ist mit dem zum Gewindebolzen 8 passenden Feingewinde versehen, und Radialschlitze 47 verlaufen von der Mittelbohrung 46 nach außen und enden kurz vor dem Außenrand der Stellmutter 16. Die von den Radialschlitzen 47 begrenzten Sektoren 48 ermöglichen eine elastische Verformung der Stellmutter 16 in der Achsrichtung der Mittelbohrung 46, wie sie in Fig. 2 auch gestrichelt dargestellt ist.

Mit dieser Form der Stellmutter 16 wird es möglich, einerseits die schrittweise Nachstellung der Stellschraube entlang dem Gewindebolzen 8 und andererseits die selbsttätige Rückstellung der Nachstellvorrichtung um zu weit verstellte Strecken mit sehr geringem Bauteilaufwand durchzuführen.

Die selbsttätige Rückstellung erfolgt im Ausführungsbeispiel durch Zurückspringen des sich durch die elastische Verformung der Sektoren 48 öffnenden Muttergewindes um wenigstens einen Gang des Feingewindes auf dem Gewindebolzen 8.
Da bei jedem Belasten der Sitzfederung das Schraubgetriebe und die Stellmutter 16 nur um einen Umdrehungsbruchteil verstellt werden, wird der Rückstellvorgang nur selten einsetzen.

Zum Schraubgetriebe hin können die Sektoren 48 nicht ausfedern, da sie daran durch die Scheibe 15 gehindert werden.

Da Setzungsverformungen der Sitzfederung 2 im Normalfall - gewaltfrei - lediglich Bruchteile von Millimetern betragen, wird mit dem erfindungsgemäßen Sitzkontaktschalter eine zuverlässige Funktion durch stetes, schrittweises Nachstellen innerhalb der Betätigungsvorrichtung gewährleistet.

Es ist selbstverständlich möglich, die Stellmutter mit der Sitzfederung drehfest und den Feingewindebolzen mit dem Schraubgetriebe drehbar zu verbinden,
auch für den Freilauf etwa einen Radialzahnkranz mit entsprechend angeordneten Federklinken vorzusehen und letztere drehfest, den Zahnkranz mitdrehend zu befestigen, um damit kinematische Umkehrungen zum gezeigten Ausführungsbeispiel zu realisieren.

## Patentansprüche

1. Sitzkontaktschalter zur Erzeugung eines "Sitz besetzt"-Signals bei belastungsbedingter Annäherung einer Sitzfederung (2) an einen Sitzrahmen mit einer Betätigungsvorrichtung (4), die einen an der Sitzfederung (2) anlenkbaren beweglichen Teil (6) und einen am Sitzrahmen befestigbaren Basisteil (3) aufweist und durch Relativbewegung zwischen ihrem beweglichen Teil (6) und ihrem Basisteil (3) Schaltkontakte in und außer leitenden Kontakt bringt
und die Selbstnachstellend ist und sowohl elastische als auch bleibende Verformungen der Sitzfederung ausgleicht, um eine Dauerbetätigung des Sitzkontaktschalters bei bleibend verformter Sitzfederung zu verhindern,
**dadurch gekennzeichnet,**
daß der bewegliche Teil (6) der Betätigungsvorrichtung (4) mit deren Basisteil (3) koaxial verschiebbar verbunden und durch Federkraft vom Basisteil (3) zur Sitzfederung (2) hin gegen einen Anschlag (33) am Basisteil (3) vorgespannt ist,
daß innerhalb der Betätigungsvorrichtung (4) eine deren unbelastete Eigenlänge bei jeder Belastung der Sitzfederung (2) mittels einer mechanisch antreibbaren, aus einer Stellmutter (16) und einem Gewindebolzen (8) bestehenden Stellschraube - welche ein mit der Sitzfederung (2) drehfest verbundenes Teil z.B. Stellmutter bzw. Gewindebolzen aufweist - verkürzende Nachstellvorrichtung (9 bis 23) vorgesehen ist, wobei das dreh-antreibbare Teil (Gewindebolzen bzw. Stellmutter) der Stellschraube mechanisch wenigstens mittelbar mit einem in Rückdrehrichtung sperrenden Freilauf (21) verbunden ist,
und daß Längendifferenzen zwischen
- dem Abstand von der wieder entlasteten Sitzfederung (2) zum Sitzrahmen bzw. Halterung (1) längs der Betätigungsvorrichtung (4) einerseits und
- der unbelasteten Eigenlänge der Betätigungsvorrichtung (4) andererseits
bis zu einem Höchstwert durch Verformung von elastischen Gliedern (48) der Stellmutter (16) der Stellschraube ausgeglichen werden,
wobei die elastischen Glieder (48) der Stellmutter (16) nach Erreichen des Höchstwertes der Längendifferenz durch Krafteinwirkung bei Entlastung der Sitzfederung entlang des Gewindebolzens (8) wenigstens teilweise in eine veränderte Lage entspannt werden.

2. Sitzkontaktschalter nach Anspruch 1 ,
**dadurch gekennzeichnet,**
daß ein Schalterkontakt (34) im Basisteil (3) gegen eine Federkraft von einem Anschlag (37) weg verschiebbar geführt ist und daß ein anderer Schalterkontakt (26) dem beweglichen Teil (6) zugeordnet ist,
wobei durch koaxiale Verschiebung des beweglichen Teils (6) relativ zum Basisteil (3) bei Belastung der Sitzfederung (2) zunächst die beiden Schalterkontakte (34, 26) miteinander in elektrischen Kontakt gebracht werden und dann der erste Schalterkontakt (34) von seinem Anschlag (37) weg verschoben wird.

3. Sitzkontaktschalter nach Anspruch 1 ,
**dadurch gekennzeichnet,**
daß ein Schalterkontakt (44) fest und elektrisch isoliert am Basisteil (3) angeordnet ist
und daß ein Schalterkontakt (41) dem beweglichen Teil (6) elektrisch isoliert zugeordnet ist,
wobei die beiden Schalterkontakte (44, 41) bei unbelasteter Sitzfederung (2) elektrisch verbunden sind und bei Belastung der Sitzfederung (2) durch die koaxiale Verschiebung des beweglichen Teils (6) relativ zum Basisteil (3) getrennt werden.

4. Sitzkontaktschalter nach Anspruch 2 oder 3 ,
**dadurch gekennzeichnet,**
daß der dem beweglichen Teil (6) zugeordnete Schalterkontakt auf einem beweglichen Kontaktträger (26) angeordnet ist, der bei entlasteter Sitzfederung durch Federkraft gegen einen Anschlag (29) am Basisteil (3) vorgespannt ist.

5. Sitzkontaktschalter nach Anspruch 4 ,
**dadurch gekennzeichnet,**
daß eine Feder (24) zwischen den beweglichen Kontaktträger (26) und eine Federhalterung (31) am beweglichen Teil (6) gespannt ist.

6. Sitzkontaktschalter nach Anspruch 4 ,
**dadurch gekennzeichnet,**
daß eine Feder (24') zwischen dem beweglichen Kontaktträger (26) und eine Federhalterung (39) am Basisteil (3) gespannt ist
und daß eine weitere Feder (25) zwischen die Federhalterung (39) am Basisteil (3) und eine Federhalterung (31) am beweglichen Teil (6) gespannt ist.

7. Sitzkontaktschalter nach Anspruch 4 ,
**dadurch gekennzeichnet,**
daß der bewegliche Kontaktträger (26) im Basisteil (3) drehfest verschiebbar geführt ist.

8. Sitzkontaktschalter nach Anspruch 1 ,
**dadurch gekennzeichnet,**
daß die Stellschraube (8, 16) der Nachstellvorrichtung (9 bis 23) mittels eines steilgängigen Schraubgetriebes (11, 12) durch Verschiebung des beweglichen Teils (6) relativ zum Basisteil (3) antreibbar ist.

9. Sitzkontaktschalter nach Anspruch 8 ,
**dadurch gekennzeichnet,**
daß ein Freilauf (21) an dem Schraubgetriebe (9 bis 13) vorgesehen ist, der nur eine bestimmte Umdrehungsrichtung des Schraubgetriebes (9 bis 13 ) freigibt.

10. Sitzkontaktschalter nach Anspruch 9 ,
**dadurch gekennzeichnet,**
daß am Basisteil (3) Antriebsmittel bzw. Federhaken (12) für das Schraubgetriebe (9 bis 13) vorgesehen sind,
daß am beweglichen Teil (6) als Bestandteile der Stellschraube ein Gewindebolzen (8) und eine auf diesem schraubbare Stellmutter (16) und als Bestandteile des Schraubgetriebes (9 bis 13) eine Hülse (9) mit einem Steilgewinde (11) sowie der Freilauf (21) angeordnet sind.

11. Sitzkontaktschalter nach Anspruch 10 ,
**dadurch gekennzeichnet,**
daß der Gewindebolzen (8) an der Sitzfederung (2) bezüglich seiner Längsachse drehfest angelenkt ist und daß die Stellmutter (16) mit der Hülse (9) fest verbunden ist.

12. Sitzkontaktschalter nach Anspruch 10 ,
**dadurch gekennzeichnet,**
daß der Gewindebolzen mit der Hülse fest verbunden ist und daß die Stellmutter drehfest an der Sitzfederung (2) angelenkt ist.

13. Sitzkontaktschalter nach Anspruch 9 oder 10 ,
**dadurch gekennzeichnet,**
daß der Freilauf (21) aus Federklinken (18) und einem Zahnkranz (19) mit Sägezähnen (20) gebildet wird.

14. Sitzkontaktschalter nach den Ansprüchen 7 und 13 ,
**dadurch gekennzeichnet,**
daß die Federklinken (18) am Schraubgetriebe (9 bis 13) und der Zahnkranz (19) auf dem beweglichen Kontaktträger (26) angeordnet sind.

15. Sitzkontaktschalter nach den Ansprüchen 7 und 13 ,
**dadurch gekennzeichnet,**
daß die Federklinken am beweglichen Kontaktträger und der Zahnkranz am Schraubgetriebe angeordnet sind.

16. Sitzkontaktschalter nach Anspruch 10 ,
**dadurch gekennzeichnet,**
daß der Basisteil (3) als Hohlzylinder ausgebildet ist und die Hülse (9) umschließt,
daß die Antriebsmittel als in den Hohlzylinder hineinragende Federhaken (12) ausgebildet sind und endseitig in Gänge des auf der Hülse (9) außenseitig angeordneten Steilgewindes (11) eingreifen.

17. Sitzkontaktschalter nach Anspruch 16 ,
**dadurch gekennzeichnet,**
daß die Gewindegänge (10) des Steilgewindes (11) sägezahnförmig ausgebildet sind,
um ein Überspringen der Federhaken (12) von einem Gewindegang zum nächsten bei sperrendem Freilauf (21) und Entlastung der Sitzfederung (2) zu ermöglichen.

18. Sitzkontaktschalter nach Anspruch 10 oder 17 ,
**dadurch gekennzeichnet,**
daß die Gewindegänge des Steilgewindes (11) in einem Steigungswinkel von 45° oder weniger, vorzugsweise 30°, zur Hülsenlängsachse verlaufen.

19. Sitzkontaktschalter nach Anspruch 10 ,
**dadurch gekennzeichnet,**
daß die Stellschraube als Feingewindeschraube ausgebildet ist.

20. Sitzkontaktschalter nach Anspruch 10 oder 19,
**dadurch gekennzeichnet,**
daß die Stellmutter (16) der Stellschraube als Scheibe mit einem Muttergewinde, mehreren vom Muttergewinde ausgehenden, vor dem Scheibenaußenrand endenden Radialschlitzen (47) und durch die Radialschlitze abgeteilten federfähigen Sektoren (48) ausgebildet ist, welche Sektoren die elastisch verformbaren Glieder (48) der Stellmutter (16) zum Ausgleich der Längendifferenz bilden,
wobei nach Erreichen des Höchstwertes der Längendifferenz die Sektoren (48) entlang dem Gewindebolzen (8) selbsttätig zurückschnappen und das Muttergewinde wieder mit dem Bolzengewinde in Eingriff bringen.

## Claims

1. Seat-contact switch for generating a "seat occupied" signal when a seat suspension (2) approaches a seat frame as a result of loading, with an actuating device (4) which has a moveable part (6) articulatable on the seat suspension (2) and a base part (3) fastenable to the seat frame and which, as a result of relative movement between the moveable part (6) and its base part (3), brings switch contacts into and out of conductive contact and which is self-adjusting and compensates both elastic and permanent deformations of the seat suspension, in order to prevent continuous actuation of the seat-contact switch when the seat suspension undergoes permanent deformation, characterized in that the moveable part (6) of the actuating device (4) is connected to its base part (3) so as to be coaxially displaceable and as a result of spring force is prestressed from the base part (3) towards the seat suspension (2) against a stop (33) on the base part (3), in that within the actuating device (4) there is an adjusting device (9 to 23) which reduces the unloaded natural length of the latter under any loading of the seat suspension (2) by means of a mechanically driveable adjusting screw consisting of an adjusting nut (16) and of a threaded bolt (8) and having a part, for example adjusting nut or threaded bolt connected in a rotation-preventing manner to the seat suspension (2), the rotary-driveable part (threaded bolt or adjusting nut) of the adjusting screw being connected mechanically, at least indirectly, to a free-wheel (21) exerting a blocking effect in the return direction of rotation, and in that differences in length between
- the distance from the seat suspension (2) relieved again to the seat frame and/or mounting (1) along the actuating device (4), on the one hand, and
- the unloaded natural length of the actuating device (4), on the other hand,
are compensated up to a maximum value as a result of the deformation of elastic members (48) of the adjusting nut (16) of the adjusting screw, and after the maximum value of the difference in length is reached, the elastic members (48) of the adjusting nut (16) are relaxed at least partially into a changed position along the threaded bolt (8) as a result of the effective force when the seat suspension is relieved.

2. Seat-contact switch according to Claim 1, characterized in that a switch contact (34) is guided in the base part (3) so as to be displaceable away from a stop (37) counter to a spring force, and in that another switch contact (26) is assigned to the moveable part (6), and as a result of the coaxial displacement of the moveable part (6) relative to the base part (3) under the loading of the seat suspension (2) the two switch contacts (34, 26) are first brought into electrical contact with one another and then the first switch contact (34) is displaced away from its stop (37).

3. Seat-contact switch according to Claim 1, characterized in that a switch contact (44) is arranged on the base part (3) fixedly and in an electrically insulated manner, and in that a switch contact (41) is assigned in an electrically insulated manner to the moveable part (6), and the two switch contacts, (44, 41) are connected electrically when the seat suspension (2) is unloaded and are separated as a result of the coaxial displacement of the moveable part (6) relative to the base part (3) when the seat suspension (2) is subjected to load.

4. Seat-contact switch according to Claim 2 or 3, characterized in that the switch contact assigned to the moveable part (6) is arranged on a moveable contact carrier (26) which, when the seat suspension is relieved, is prestressed against a stop (29) on the base part (3) as a result of spring force.

5. Seat-contact switch according to Claim 4, characterized in that a spring (24) is stretched between the moveable contact carrier (26) and a spring mounting (31) on the moveable part (6).

6. Seat-contact switch according to Claim 4, characterized in that a spring (24') is stretched between the moveable contact carrier (26) and a spring mounting (39) on the base part (3), and in that a further spring (25) is stretched between the spring mounting (39) on the base part (3) and a spring mounting (31) on the moveable part (6).

7. Seat-contact switch according to Claim 4, characterized in that the moveable contact carrier (26) is guided in the base part (3) displaceably and in a rotation-preventing manner.

8. Seat-contact switch according to Claim 1, characterized in that the adjusting screw (8, 16) of the adjusting device (9 to 23) can be driven as a result of the displacement of the moveable part (6) relative to the base part (3) by means of a coarse-pitch helical gear (11, 12).

9. Seat-contact switch according to Claim 8, characterized in that on the helical gear (9 to 13) there is a free-wheel (21) which allows only a specific direction of rotation of the helical gear (9 to 13).

10. Seat-contact switch according to Claim 9, characterized in that drive means and/or spring hooks (12) for the helical gear (9 to 13) are provided on the base part (3), and in that there are arranged on the moveable part (6), as components of the adjusting screw, a threaded bolt (8) and an adjusting nut (16) screwable on the latter and, as components of the helical gear (9 to 13), a sleeve (9) with a coarse thread (11) and the freewheel (21).

11. Seat-contact switch according to Claim 10, characterized in that the threaded bolt (8) is articulated on the seat suspension (2) in a rotation-preventing manner relative to its longitudinal axis, and in that the adjusting nut (16) is connected fixedly to the sleeve (9).

12. Seat-contact switch according to Claim 10, characterized in that the threaded bolt is connected fixedly to the sleeve, and in that the adjusting nut is articulated on the seat suspension (2) in a rotation-preventing manner.

13. Seat-contact switch according to Claim 9 or 10, characterized in that the free-wheel (21) is formed from spring pawls (18) and from a toothed ring (19) with saw teeth (20).

14. Seat-contact switch according to Claims 7 and 13, characterized in that the spring pawls (18) are arranged on the helical gear (9 to 13) and the toothed ring (19) is arranged on the moveable contact carrier (26).

15. Seat-contact switch according to Claims 7 and 13, characterized in that the spring pawls are arranged on the moveable contact carrier and the toothed ring is arranged on the helical gear.

16. Seat-contact switch according to Claim 10, characterized in that the base part (3) is designed as a hollow cylinder and surrounds the sleeve (9), and in that the drive means are designed as spring hooks (12) projecting into the hollow cylinder and engage at their end into flights of the coarse thread (11) arranged on the outside of the sleeve (9).

17. Seat-contact switch according to Claim 16, characterized in that the flights (10) of the coarse thread (11) are made sawtooth-shaped, to make it possible for the spring hooks (12) to jump over from one flight to the next when the free-wheel (21) exerts a blocking effect and the seat suspension (2) is relieved.

18. Seat-contact switch according to Claim 10 or 17, characterized in that the flights of the coarse thread (11) extend at a pitch angle of 45° or less, preferably 30°, relative to the longitudinal axis of the sleeve.

19. Seat-contact switch according to Claim 10, characterized in that the adjusting screw is designed as a fine-thread screw.

20. Seat-contact switch according to Claim 10 or 19, characterized in that the adjusting nut (16) of the adjusting screw is designed as a disc with a nut thread, several radial slots (47) starting from the nut thread and ending short of the outer edge of the disc, and resilient sectors (48) divided off by the radial slots, the said sectors forming the elastically deformable members (48) of the adjusting nut (16) for compensating the difference in length, and after the maximum value of the difference in length is reached, the sectors (48) snap back automatically along the threaded bolt (8) and bring the nut thread into engagement with the bolt thread again.

## Revendications

1. Commutateur à contacts pour siège servant à produire un signal "siège occupé" lorsqu'une suspension de siège (2) se rapproche d'un châssis de siège, sous l'effet d'une sollicitation, comportant un dispositif d'actionnement (4), qui comprend une partie mobile (6) pouvant être articulée sur la suspension (2) et une partie de base (3) pouvant être fixée sur le châssis de siège, et qui ferme et ouvre des contacts de commutation par mouvement relatif entre sa partie mobile (6) et sa partie de base (3), et qui est à réglage automatique et compense aussi bien des déformations élastiques que des déformations permanentes de la suspension du siège, de façon à empêcher un actionnement permanent du commutateur à contacts dans le cas d'une suspension de siège déformée de façon permanente, caractérisé en ce que :
- la partie mobile (6) du dispositif d'actionnement (4) est reliée à sa partie de base (3) avec possibilité de translation coaxiale et est précontrainte contre une butée (33) de la partie de base (3) sous l'effet d'une force élastique exercée de la partie de base (3) vers la suspension de siège (2),
- il est prévu à l'intérieur du dispositif d'actionnement (4) un dispositif de réglage correctif (9 à 23) raccourcissant sa longueur propre à l'état non sollicité pour chaque sollicitation de la suspension de siège (2) au moyen d'une vis de manoeuvre, pouvant être entraînée mécaniquement et se composant d'un écrou de manoeuvre (16) et d'une broche filetée (8) -la vis comportant une partie, par exemple un écrou de manoeuvre ou une broche filetée, reliée de façon non tournante à la suspension de siège (2)-, la partie pouvant être entraînée en rotation (broche filetée ou écrou de manoeuvre) de la vis de manoeuvre étant reliée mécaniquement, au moins indirectement, avec une roue libre (21) se bloquant dans le sens de rotation inverse,
- et des différences de longueurs entre
. d'une part l'espacement entre la suspension de siège (2) à nouveau déchargée et le châssis de siège (1) ou le support le long du dispositif d'actionnement (4) et
. d'autre part la longueur propre à l'état non chargé du dispositif d'actionnement (4)
- jusqu'à une valeur maximale, par déformation d'organes élastiques (48) de l'écrou de manoeuvre (16) de la vis de manoeuvre,
- les organes élastiques (48) de l'écrou de manoeuvre (16) étant détendus, après atteinte de la valeur maximale de la différence de longueur, par action d'une force, lors de la décharge de la suspension de siège, le long de la broche filetée (8) au moins partiellement jusque dans une position modifiée.

2. Commutateur à contacts pour siège selon la revendication 1, caractérisé en ce qu'un contact de commutateur (34) est guidé en translation dans la partie de base (3) en éloignement d'une butée (37) et en opposition à une force de ressort et en ce qu'un autre contact de commutateur (26) est associé à la partie mobile (6), de sorte que, par une translation coaxiale de la partie mobile (6) par rapport à la partie de base (3) et dans le cas d'une sollicitation de la suspension de siège (2), initialement les deux contacts de commutateur (34, 26) seront amenés l'un contre l'autre en contact électrique et ensuite le premier contact de commutateur (34) sera écarté de sa butée (37).

3. Commutateur à contacts pour siège selon la revendication 1, caractérisé en ce qu'un contact de commutateur (44) est disposé de façon fixe et isolée électriquement sur la partie de base (3) et en ce qu'un contact de commutateur (41) est associé de façon électriquement isolée à la partie mobile (6), les deux contacts de commutateur (44, 41) étant reliés électriquement lorsque la suspension de siège (2) n'est pas sollicitée alors que, lors d'une sollicitation de la suspension de siège (2) ils sont séparés l'un de l'autre par la translation coaxiale de la partie mobile (6) par rapport à la partie de base (3).

4. Commutateur à contacts pour siège selon la revendication 2 ou 3, caractérisé en ce que le contact de commutateur associé à la partie mobile (6) est disposé sur un support de contact mobile (26) qui, quand la suspension de siège est déchargée, est précontraint par une force de ressort contre une butée (29) prévue sur la partie de base (3).

5. Commutateur à contacts pour siège selon la revendication 4, caractérisé en ce qu'un ressort (24) est tendu entre le support de contact mobile (26) et un support de ressort (31) prévu sur la partie mobile (6).

6. Commutateur à contacts pour siège selon la revendication 4, caractérisé en ce qu'un ressort (24') est tendu entre le support de contact mobile (26) et un support de ressort (39) prévu sur la partie de base (3) et en ce qu'un autre ressort (25) est tendu entre le support de ressort (39) prévu sur la partie de base (3) et un support de ressort (31) prévu sur la partie mobile (6).

7. Commutateur à contacts pour siège selon la revendication 4, caractérisé en ce que le support de contact mobile (26) est guidé dans la partie de base (3) en translation mais sans pouvoir tourner.

8. Commutateur à contacts pour siège selon la revendication 1, caractérisé en ce que la vis de manoeuvre (8, 16) du dispositif de réglage correctif (9 à 23) peut être entraînée au moyen d'une transmission filetée à pas rapide (11, 12) par translation de la partie mobile (6) par rapport à la partie de base (3).

9. Commutateur à contacts pour siège selon la revendication 8, caractérisé en ce qu'il est prévu sur la transmission filetée (9 à 13) une roue libre (21) qui permet seulement un sens déterminé de rotation de la transmission filetée (9 à 13).

10. Commutateur à contacts pour siège selon la revendication 9, caractérisé en ce qu'il est prévu sur la partie de base (3) des moyens d'entraînement ou des crochets élastiques (12) pour la transmission filetée (9 à 13), en ce qu'il est prévu sur la partie mobile (6), comme composants de la vis de manoeuvre, une broche filetée (8) et un écrou de manoeuvre (16) pouvant être vissé sur celle-ci et il est prévu comme composants de la transmission filetée (9 à 13) un fourreau (9) pourvu d'un filetage à pas rapide (11) ainsi que la roue libre (21).

11. Commutateur à contact pour sièges selon la revendication 10, caractérisé en ce que la broche filetée (8) est articulée sur la suspension de siège (2) sans possibilité de rotation par rapport à son axe longitudinal et en ce que l'écrou de manoeuvre (16) est relié de façon fixe au fourreau (9).

12. Commutateur à contacts pour siège selon la revendication 10, caractérisé en ce que la broche filetée est reliée rigidement au fourreau et en ce que l'écrou de manoeuvre est articulé sur la suspension de siège (2) sans possibilité de rotation relative.

13. Commutateur à contacts pour siège selon la revendication 9 ou 10, caractérisé en ce que la roue libre (21) est formée de cliquets élastiques (18) et d'une couronne dentée (19) comportant des dents de scie (20).

14. Commutateur à contacts pour siège selon les revendications 7 et 13, caractérisé en ce que les cliquets élastiques (18) sont disposés sur la transmission filetée (9 à 13) et la couronne dentée (19) est disposée sur le support de contact mobile (26).

15. Commutateur à contacts pour siège selon les revendications 7 et 13, caractérisé en ce que les cliquets élastiques sont disposés sur le support de contact mobile et la couronne dentée est disposée sur la transmission filetée.

16. Commutateur à contacts pour siège selon la revendication 10, caractérisé en ce que la partie de base (3) est agencée comme un cylindre creux et entoure le fourreau (9) et en ce que les moyens d'entraînement sont agencés sous la forme de crochets élastiques (12) pénétrant dans le cylindre creux et s'accrochent par leurs extrémités dans des filets du filetage à pas rapide (11) situé extérieurement sur le fourreau (9).

17. Commutateur à contacts pour siège selon la revendication 16, caractérisé en ce que les filets (10) du filetage à pas rapide (11) sont agencés en forme de dents de scie de façon à permettre aux crochets élastiques (12) de sauter d'un filet du filetage au suivant lors d'un blocage de la roue libre (21) et d'une décharge de la suspension de siège (2).

18. Commutateur à contacts pour siège selon la revendication 10 ou 17, caractérisé en ce que les filets du filetage à pas rapide (11) sont orientés selon un angle d'inclinaison de 45° ou moins, de préférence de 30°, par rapport à l'axe longitudinal du fourreau.

19. Commutateur à contacts pour siège selon la revendication 10, caractérisé en ce que la vis de manoeuvre est agencée sous la forme d'une vis à filetage fin.

20. Commutateur à contacts pour siège selon la revendication 10 ou 19, caractérisé en ce que l'écrou de manoeuvre (16) de la vis de manoeuvre est agencé sous forme d'un disque comportant un filetage d'écrou, plusieurs fentes radiales (47) partant du filetage d'écrou et se terminant avant le bord extérieur du disque ainsi que des secteurs (48) séparés par les fentes radiales, ayant une nature élastique et qui constituent les organes (48), élastiquement déformables, de l'écrou de manoeuvre (16) pour compenser la différence de longueurs, de telle sorte que, après atteinte de la valeur maximale de la différence de longueur, les secteurs (48) se rétractent automatiquement et brusquement le long de la broche filetée (8) et ramènent à nouveau le filetage d'écrou en prise avec le filetage de broche.
